# EUROPEAN PATENT APPLICATION

(11) **EP 4 443 655 A1**
(43) Date of publication of application: **09.10.2024**
(21) Application number: 24165833.5
(22) Date of filing: 25.03.2024
(51) Int. Cl.: H01R 4/18, H01R 43/048, H01R 43/28, H01R 11/05, H01R 11/12

(54) **CONNECTION STRUCTURE OF INSULATED WIRE TO TERMINAL AND METHOD OF MANUFACTURING THE SAME**

(30) Priority: 06.04.2023 JP 2023062176
(71) Applicant: DENSO CORPORATION, Aichi-pref. 448-8661 (JP)
(72) Inventor: TERADA, Koichi, Kariya-city, Aichi-pref., 448-8661 (JP); YAMADA, Junpei, Kariya-city, Aichi-pref., 448-8661 (JP); YAMAMOTO, Takemasa, Kariya-city, Aichi-pref., 448-8661 (JP)
(74) Representative: Winter, Brandl - Partnerschaft mbB

(57) **Abstract**

A connection structure connects an insulated wire (10) to a terminal (30). The insulated wire has a conductor (11) covered with an insulating cover (14). The insulated wire has: a cover portion (16) where the conductor is covered with the insulating cover; an exposed portion (11b) where the conductor is exposed; and a crushed portion (18) including a boundary (13) between the exposed portion and the cover portion and subjected to crushing. The terminal includes: a plate base (31); a conductor crimping part (32) extended and bent from the plate base to crimp the exposed portion together with the plate base; and a cover crimping part (33) extended and bent from the plate base to crimp the cover portion together with the plate base. The boundary is positioned between the conductor crimping part and the cover crimping part.

## Description

The present disclosure relates to a connection structure in which an insulated wire having a conductor covered with an insulating cover is connected to a terminal.

JP 2015-27159 A describes a connection structure, in which a step is formed in a conductor exposed portion, since a part of a conductor is removed when an insulating cover is peeled off. A terminal includes a plate base, a bonding portion and a fixing portion. The conductor exposed portion is supported between the plate base and the bonding portion. The insulating cover is supported between the plate base and the fixing portion. The terminal is electrically connected and fixed to a circuit or the like.

In the connection structure, although the insulating cover is fixed by the fixing portion, stress concentrates at the step of the conductor exposed portion when the insulated wire vibrates. Therefore, the insulated wire may be bent at the boundary between the insulating cover and the conductor exposed portion, and there is still room for improvement.

The present disclosure solves the above issue, and a main object thereof is to suppress bending of an insulated wire at a boundary between an insulating cover and a conductor exposed portion in a connection structure between the insulated wire and a terminal.

According to a first aspect of the disclosure, a connection structure connects an insulated wire, in which a conductor is covered with an insulating cover, to a terminal. The insulated wire includes: a cover portion where the conductor is covered with the insulating cover; an exposed portion where the conductor is exposed; and a crushed portion subjected to crushing process. The crushed portion has a boundary between the exposed portion and the cover portion. The terminal includes a plate-shaped plate base, a conductor crimping part which is bent and extends from the plate base to crimp the exposed portion together with the plate base, and a cover crimping part which is bent and extends from the plate base to crimp the cover portion together with the plate base. The boundary is positioned between the conductor crimping part and the cover crimping part.

According to the above configuration, the connection structure between the insulated wire and the terminal connects the insulated wire in which the conductor is covered with the insulating cover to the terminal. The insulated wire includes the cover portion where the conductor is covered with the insulating cover, and the exposed portion where the conductor is exposed. The terminal includes: the plate base, the conductor crimping part bent and extended from the plate base to crimp the exposed portion together with the plate base; and the cover crimping part bent and extended from the plate base to crimp the cover portion together with the plate base.

A step is often formed in the conductor, at the boundary between the cover portion and the exposed portion, since a part of the conductor is removed when the insulating cover is peeled off from the insulated wire. Therefore, when the insulated wire vibrates, stress is concentrated at the step of the conductor, and the insulated wire may be bent at the boundary between the cover portion and the exposed portion.

In this regard, the insulated wire includes the crushed portion having the boundary between the exposed portion and the cover portion. Since the conductor is hardened in the crushed portion, the conductor is less likely to be bent. The boundary is positioned between the conductor crimping part and the cover crimping part. That is, both sides of the work-hardened boundary are crimped by the conductor crimping part and the cover crimping part. Therefore, even if stress concentrates on the step of the conductor when the insulated wire vibrates, the insulated wire can be restricted from bending at the boundary between the cover portion and the exposed portion. Further, since the conductor crimping part and the cover crimping part do not crimp the boundary, even if a step is formed at the boundary, it is possible to suppress the conductor crimping part and the cover crimping part from being inclined at the step.

According to a second aspect, the terminal includes a coupling portion extending in a thickness direction from the plate base at location between the conductor crimping part and the cover crimping part to couple the conductor crimping part and the cover crimping part. An end of the coupling portion is positioned between the plate base and a center of the conductor in the thickness direction.

According to the above configuration, the terminal includes the coupling portion extending in the thickness direction from the plate base at location between the conductor crimping part and the cover crimping part so as to couple the conductor crimping part and the cover crimping part. As the length of the coupling portion extending from the plate base in the thickness direction of the plate base increases, the rigidity of the coupling portion increases, and the conductor crimping part and the cover crimping part are less likely to be deformed when being crimped. The exposed portion tends to be thinner than the cover portion due to the absence of the insulating cover. Therefore, when the rigidity of the coupling portion is high, it is difficult to deform the conductor crimping part so as to follow the exposed portion, and the force with which the conductor crimping part crimps the exposed portion may decrease.

In this regard, the end of the coupling portion is located closer to the plate base than the center of the conductor in the thickness direction. Therefore, the rigidity of the coupling portion can be reduced, and the conductor crimping part is easily deformed to follow the exposed portion. Therefore, it is possible to suppress a decrease in the force with which the conductor crimping part crimps the exposed portion.

In a third aspect, the conductor crimping part crimps the exposed portion included in the crushed portion together with the plate base. According to such a configuration, a part of the exposed portion to be crimped by the conductor crimping part may be subjected to the crushing process. Therefore, when the crushed portion is formed in the insulated wire, a part corresponding to the boundary and a part corresponding to the exposed portion can be collectively crushed. Therefore, it is easy to form the crushed portion in the insulated wire. The exposed portion may be formed by peeling off the insulating cover after performing the crushing process on the insulated wire, or may be formed by peeling off the insulating cover from the insulated wire before performing the crushing process on the insulated wire.

According to a fourth aspect, the cover crimping part crimps the cover portion included in the crushed portion together with the plate base. According to such a configuration, it is possible to restrict the thickness of the cover portion crimped by the cover crimping part from becoming larger than the thickness of the exposed portion crimped by the conductor crimping part. Therefore, the force with which the conductor crimping part crimps the exposed portion can be suppressed from becoming lower than the force with which the cover crimping part crimps the cover portion.

According to a fifth aspect, the cover crimping part crimps the cover portion not included in the crushed portion together with the plate base. According to such a configuration, the cover portion at a position farther from the boundary than the cover portion included in the crushed portion can be crimped by the cover crimping part. Therefore, the vibration transmitted from the cover portion to the exposed portion can be suppressed from being transmitted to the boundary, and the stress acting on the boundary can be reduced.

According to a sixth aspect, at least one of the conductor crimping part and the cover crimping part is crimped by thermal crimping. According to such a configuration, it is possible to improve the force of fixing the insulated wire in the thermal crimping part subjected to the thermal crimping. The bending of the insulated wire at the boundary is suppressed by work-hardening the crushed portion. Therefore, when at least one of the conductor crimping part and the cover crimping part is thermally crimped, a force for fixing the insulated wire and the terminal can be secured.

According to a seventh aspect, the terminal may include a plurality of at least one of the conductor crimping part and the cover crimping part. According to an eighth aspect, two insulated wires are connected to a terminal, and the terminal includes the conductor crimping part and the cover crimping part for each of the two insulated wires.

According to the above configuration, in the connection structure in which the two insulated wires are connected to the terminal, the same operation and effect as those of any one of the first to seventh aspects can be achieved.

In a ninth aspect, a method of manufacturing a connection structure in which an insulated wire having a conductor covered with an insulating cover is connected to a terminal, the method includes: a first step of forming, in the insulated wire, a cover portion in which the conductor is covered with the insulating cover, an exposed portion in which the conductor is exposed, and a crushed portion having a boundary between the exposed portion and the cover portion and subjected to a crushing process; a second step of bringing the insulated wire into contact with the terminal including a plate base, a conductor crimping part bent and extended from the plate base, and a cover crimping part bent and extended from the plate base such that the boundary is located between the conductor crimping part and the cover crimping part; and a third step of crimping the exposed portion by the plate base and the conductor crimping part and crimping the cover portion by the plate base and the cover crimping part.

According to the manufacturing method, the connection structure of the insulated wire and the terminal can be manufactured.

In a tenth aspect, the first step includes forming the exposed portion and the crushed portion by crushing a predetermined portion including an end portion of the insulated wire and then peeling off the insulating cover at the end portion. According to such a process, before the insulating cover is peeled off from the insulated wire, the predetermined portion of the insulated wire to which the insulating cover is still attached is crushed, and thus the crushed portion is easily work-hardened uniformly.

In an eleventh aspect, the first step includes forming the exposed portion and the boundary by peeling off the insulating cover at the end portion of the insulated wire, and then forming the crushed portion by crushing a predetermined portion including the boundary. According to such a process, after the insulating cover is peeled off from the end portion of the insulated wire to form the exposed portion and the boundary, that is, after a step is generated in the conductor, the predetermined portion including the boundary is crushed. Therefore, the step formed in the conductor when the insulating cover is peeled off can be leveled by the crushing. Therefore, it is possible to suppress concentration of stress on the step of the conductor when the insulated wire vibrates.
FIG. 1 is a perspective view illustrating a connection structure between a power line and a terminal.
FIG. 2 is a cross-sectional view taken along line II-II in FIG. 1.
FIG. 3 is a cross-sectional view taken along line III-III in FIG. 2.
FIG. 4 is a cross-sectional view taken along line IV-IV in FIG. 2.
FIG. 5 is a cross-sectional view taken along line V-V of FIG. 2.
FIG. 6 is a cross-sectional view of a connection structure between a power line and a terminal in a comparative example.
FIG. 7 is a sectional view of the terminal.
FIG. 8 is a cross-sectional view taken along line VIII-VIII in FIG. 7.
FIG. 9 is a cross-sectional view of a terminal according to a modification.
FIG. 10 is a cross-sectional view taken along line X-X in FIG. 9.
FIG. 11 is a cross-sectional view of a connection structure between a power line and a terminal according to a modification.
FIG.12 is a cross-sectional view of a terminal according to another modification.
FIG.13 is a sectional view of a power line subjected to crushing process.
FIG.14 is a sectional view of a power line in which the insulating cover is peeled off and removed after the crushing process.
FIG.15 is a sectional view of a power line in a modification in which an insulating cover is peeled off and removed.
FIG.16 is a sectional view of a power line in a modification in which an insulating cover is peeled off and removed and then the power line is crushed.
FIG.17 is a sectional view of a connection structure between a power line and a terminal according to another modification.
FIG.18 is a sectional view of a connection structure between a power line and a terminal according to another modification.
FIG.19 is a sectional view of a connection structure between a power line and a terminal according to another modification.
FIG.20 is a perspective view of a connection structure between a power line and a terminal according to another modification.
FIG.21 is a cross-sectional view taken along line XXI-XXI in FIG.20.
FIG.22 is a cross-sectional view taken along line XXII-XXII in FIG.20.
FIG.23 is a cross-sectional view taken along line XXIII-XXIII in FIG.20.
FIG.24 is a perspective view of a connection structure between a power line and a terminal according to another modification.

Hereinafter, embodiments will be described with reference to the drawings, regarding a power line with a terminal, which is connected to a stator winding of a rotary electric machine. The rotary electric machine is a motor, a generator, a motor generator, or the like.

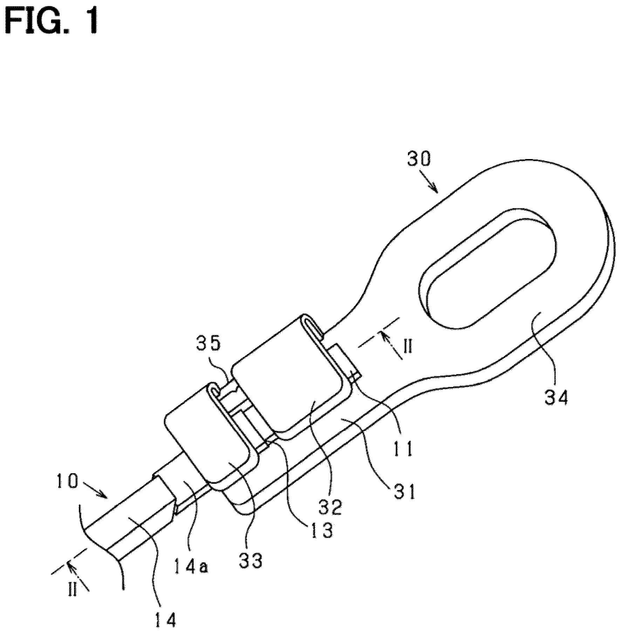

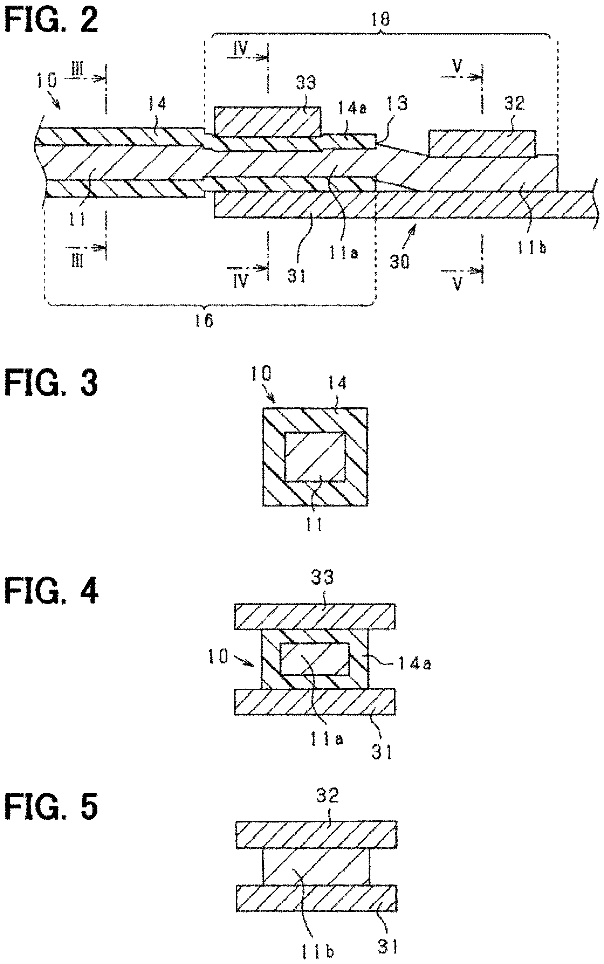

As shown in FIG. 1, one power line 10 is drawn out from each of phase windings (U-phase, V-phase, and W-phase) of the stator winding of the rotary electric machine. As shown in FIG. 3, each power line 10 is formed of a rectangular wire. That is, each of the power lines 10 includes a copper (metal) conductor 11 having a rectangular cross section and an insulating cover 14 that covers the outer peripheral surface of the conductor 11. The insulating cover 14 is formed of an insulating resin material or the like. A terminal 30 connected to an external circuit (not shown) is electrically connected to a distal end of each power line 10. Accordingly, a connection structure is configured, in which the power line 10 and the terminal 30 are connected to each other.

The distal end of the power line 10 is crushed before the terminal 30 is connected. Specifically, as illustrated in FIG. 2, an insulating cover 14a, a conductor 11a, and a conductor exposed portion 11b are subjected to crushing process. The conductor exposed portion 11b is a portion of the power line where the conductor 11 is exposed. The insulating cover 14a, the conductor 11a, and the conductor exposed portion 11b constitute a crushed portion 18.

FIG. 3 is a cross-sectional view taken along line III-III of FIG. 2. FIG. 4 is a cross-sectional view taken along line IV-IV of FIG. 2. FIG. 5 is a cross-sectional view taken along line V-V of FIG. 2. FIG. 3 shows a cross section where the power line 10 is not crushed. FIG. 4 shows a cross section illustrating a crushed portion of the power line 10. Pressure is applied to top and bottom surfaces (second surfaces) wider than side surfaces (first surfaces), and the power line 10 is crushed in the up-down direction in FIG. 4. Accordingly, the height of the insulating cover 14a is lower than the height of the insulating cover 14, and the width of the insulating cover 14a is wider than the width of the insulating cover 14. The height of the conductor 11a is lower than the height of the conductor 11, and the width of the conductor 11a is wider than the width of the conductor 11. FIG. 5 shows a cross section of the conductor exposed portion 11b subjected to the crushing process. The height of the conductor exposed portion 11b is lower than the height of the conductor 11, and the width of the conductor exposed portion 11b is wider than the width of the conductor 11.

As shown in FIG. 2, in the power line 10, the insulating cover 14 is peeled off at the end portion connected to the terminal 30 by a tool such as a cutter, such that the conductor exposed portion 11b of the conductor 11 is exposed. When the insulating cover 14 is peeled off, the cutting edge of the cutter may reach the inside of the conductor 11. Since a part of the conductor 11 is removed together with the insulating cover 14, a step (not shown) may be formed at a boundary 13 between the conductor exposed portion 11b and the insulating cover portion 16 (where the conductor 11a is covered with the insulating cover 14a). The boundary 13 is included in the crushed portion 18.

As shown in FIGS. 1 and 2, the terminal 30 includes a plate base 31, a conductor crimping part 32, a cover crimping part 33, an electric connector 34, and a coupling portion 35. The electric connector 34, the conductor crimping part 32, the coupling portion 35, and the cover crimping part 33 are located in this order along the axial direction (longitudinal direction) of the terminal 30 and are coupled to each other. The terminal 30 is integrally formed by processing a copper plate (metal plate) made of copper (metal). The plate base 31 is formed in a flat plate shape and supports the power line 10 connected to the terminal 30. In this case, the power line 10 is placed in a state where the wide surface on the long side in the rectangular cross section is in contact with (abuts) the plate base 31.

The conductor crimping part 32 extends from one end of the plate base 31 and is bent inward by bending processing. That is, the conductor crimping part 32 is bent from the plate base 31 and extends in a band shape. Thus, the conductor crimping part 32 crimps the conductor exposed portion 11b at the distal end of the power line 10 placed on the plate base 31 together with the plate base 31, and is electrically connected to the power line 10. The conductor crimping part 32 crimps the conductor exposed portion 11b at the distal end of the power line 10 together with the plate base 31 by thermal crimping. The conductor exposed portion 11b at the distal end of the power line 10 supported between the plate base 31 and the conductor crimping part 32 of the terminal 30 may be welded to the plate base 31 and the conductor crimping part 32.

The cover crimping part 33 extends from one end of the plate base 31 and is bent inward by bending processing. That is, the cover crimping part 33 is bent from the plate base 31 and extends in a band shape. As a result, the cover crimping parts 33 crimps the insulating cover 14a of the power line 10 placed on the plate base 31, and fixes (crimps) both wide surfaces of the power line 10 together with the plate base 31. The boundary 13 is positioned between the conductor crimping part 32 and the cover crimping part 33.

The electric connector 34 is formed in an annular shape having a through hole penetrating in the thickness direction at the center, and is provided on one side of the plate base 31 so as to extend on the same plane as the plate base 31. The electric connector 34 is electrically connected and fixed to a circuit or the like (not shown).

According to the above configuration, since the conductor 11 is work-hardened in the crushed portion 18, the conductor 11 is less likely to be bent. Both sides of the work-hardened boundary 13 are crimped by the conductor crimping part 32 and the cover crimping part 33. Therefore, even if stress concentrates on the boundary 13 (step) when the power line 10 vibrates, the power line 10 can be restricted from bending at the boundary 13.

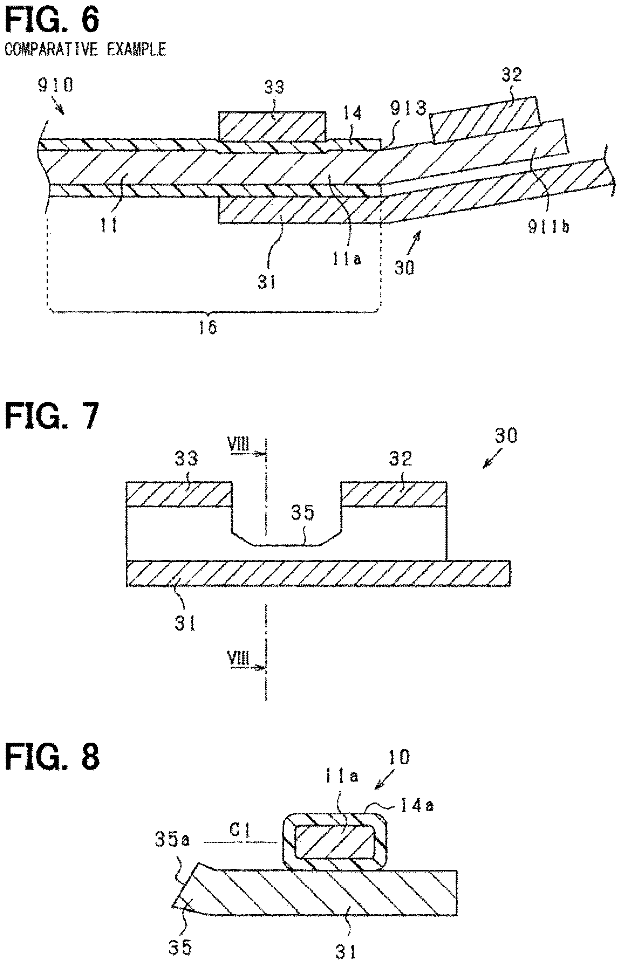

FIG. 6 is a cross-sectional view of a connection structure between a power line 910 and a terminal 30 according to a comparative example. The crushed portion 18 is not formed in the power line 910. At a boundary 913 between the insulating cover portion 16 and the conductor exposed portion 911b, a part of the conductor 11 is removed when the insulating cover 14 is peeled off from the power line 910, and a step (not shown) is formed in the conductor 11. Therefore, when the power line 910 vibrates, stress is concentrated on the step of the conductor 11, and the power line 910 may be bent at the boundary 913 between the insulating cover portion 16 and the conductor exposed portion 911b.

FIG. 7 is a cross-sectional view of the terminal 30 illustrating a state before the conductor crimping part 32 and the cover crimping part 33 are crimped. The terminal 30 is formed by punching, pressing, bending, or the like of a sheet metal. The conductor crimping part 32 and the cover crimping part 33 extend from the plate base 31 to the same height (position) in the height direction (thickness direction) of the plate base 31. The coupling portion 35 is located between the conductor crimping part 32 and the cover crimping part 33. The coupling portion 35 extends in the height direction (thickness direction) from the plate base 31 at location between the conductor crimping part 32 and the cover crimping part 33, and connects the conductor crimping part 32 and the cover crimping part 33. As shown in FIG. 8, an end 35a (edge) of the coupling portion 35 at the distal end in the height direction from the plate base 31 is positioned on the left side (in FIG.8) of the power line 10 fixed by the cover crimping part 33, and is disposed so as not to interfere with the power line 10. Accordingly, it is possible to restrict the conductor crimping part 32 and the cover crimping part 33 from being inclined by coming into contact with the step formed at the boundary 13.

As shown in FIG. 8, the position of the end 35a of the coupling portion 35 is set closer to the plate base 31 than the center C1 of the conductor 11a (power line 10) in the height direction (thickness direction of the plate base 31) fixed between the plate base 31 and the cover crimping part 33. That is, in the thickness direction of the plate base 31, the end 35a of the coupling portion 35 is located closer to the plate base 31 than the center C1 of the conductor 11a. Therefore, the rigidity of the coupling portion 35 can be reduced. As shown in FIG. 2, when the conductor crimping part 32 is crimped, the conductor crimping part 32 can be deformed to follow the conductor exposed portion 11b.

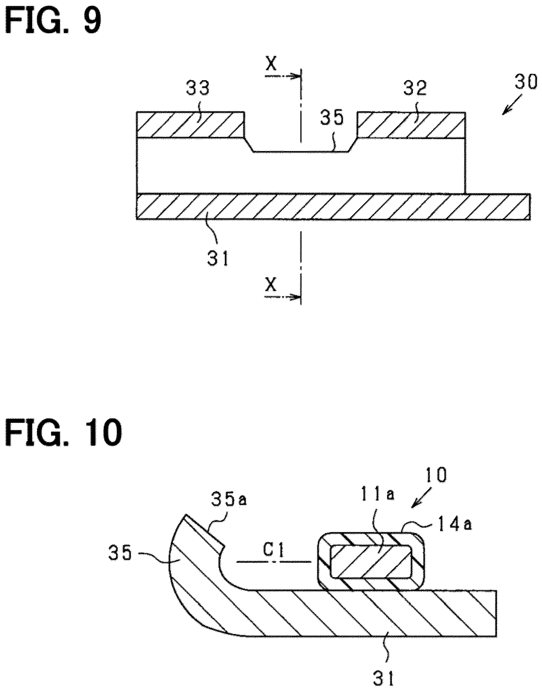

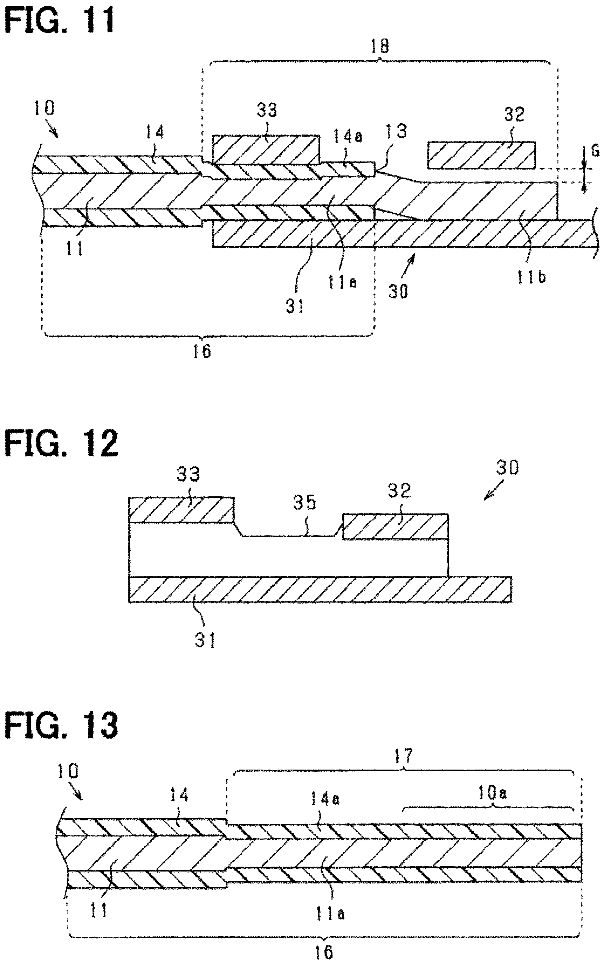

As shown in FIGS. 9 and 10, the end 35a of the coupling portion 35 may be positioned on the side away from the plate base 31 with respect to the center C1 of the conductor 11a (power line 10) in the height direction (thickness direction of the plate base 31) fixed between the plate base 31 and the cover crimping part 33. That is, in the thickness direction of the plate base 31, the end 35a (edge) of the coupling portion 35 can be located on the side farther from the plate base 31 than the center C1 of the conductor 11a. However, in this case, since the rigidity of the coupling portion 35 is increased, as shown in FIG.11, when the conductor crimping part 32 is crimped, a gap G may be formed between the conductor crimping part 32 and the conductor exposed portion 11b. That is, in a case where the rigidity of the coupling portion 35 is high, it is difficult to deform the conductor crimping part 32 so as to follow the conductor exposed portion 11b, and there is a concern that the force of the conductor crimping part 32 crimping the conductor exposed portion 11b may decrease.

Therefore, the state before the conductor crimping part 32 and the cover crimping part 33 are crimped may be changed as shown in FIG.12. That is, the conductor crimping part 32 extends to a height (position) lower than the cover crimping part 33 from the plate base 31 in the height direction (thickness direction) of the plate base 31. According to such a configuration, it is possible to suppress the formation of the gap G between the conductor crimping part 32 and the conductor exposed portion 11b when the conductor crimping part 32 is crimped.

Next, a method of manufacturing the connection structure between the power line 10 and the terminal 30 will be described. The following manufacturing method may be performed by an automated machine tool or the like, may be performed by an operator operating a machine tool or the like, or may be performed manually by an operator.

First, as shown in FIG.13, the predetermined portion 17 of the power line 10 including the end portion 10a is crushed. The predetermined portion 17 includes a portion to be the conductor exposed portion 11b subjected to the crushing process later and a portion to be the conductor 11a covered with the insulating cover 14a subjected to crushing process later. The crushing process is performed by, for example, sandwiching the power line 10 from the top and bottom surfaces (second surface) wider than the side surfaces (first surface) with a pressing machine and applying pressure. The crushing process can also be performed by hitting the predetermined portion 17 of the power line 10 with a hammer or the like to crush the predetermined portion 17, or by passing the predetermined portion 17 of the power line 10 between a pair of rollers.

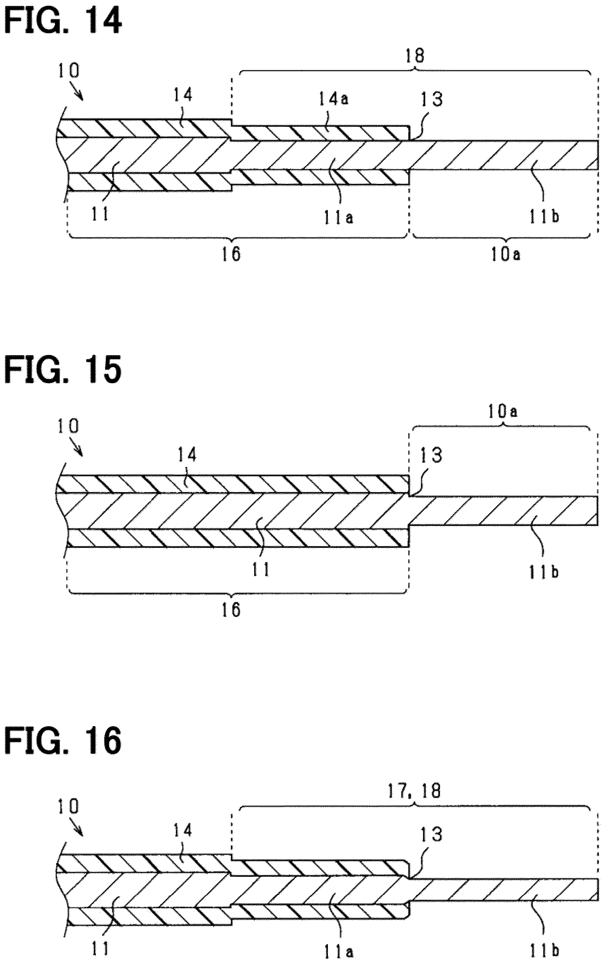

Subsequently, as shown in FIG.14, the insulating cover 14a is peeled off from the end portion 10a of the power line 10 in the crushed predetermined portion 17. The peeling and removal of the insulating cover 14a is performed using a tool such as a cutter.

The steps up to this point correspond to a first step of forming the insulating cover portion 16, the conductor exposed portion 11b, and the crushed portion 18, in the power line 10. The insulating cover portion 16 includes the conductor 11 not crushed and covered with the insulating cover 14, and the conductor 11a covered with the insulating cover 14a. The conductor 11 is exposed in the conductor exposed portion 11b. The crushed portion 18 subjected to the crushing process includes the boundary 13 between the conductor exposed portion 11b and the insulating cover portion 16.

Subsequently, the power line 10 is brought into contact with the plate base 31 of the terminal 30 illustrated in FIG.7 such that the boundary 13 of the power line 10 is located between the conductor crimping part 32 and the cover crimping part 33. At this time, as shown in FIG.1, the power line 10 is separated from the coupling portion 35. This step corresponds to the second step.

Subsequently, as shown in FIGS. 1 and 2, the conductor exposed portion 11b is crimped by the plate base 31 and the conductor crimping part 32, and the insulating cover 14a and the conductor 11a (insulating cover portion 16) are crimped by the plate base 31 and the cover crimping part 33. When the conductor exposed portion 11b is crimped by the plate base 31 and the conductor crimping part 32, heat is applied to the crimping part. This thermal crimping step corresponds to the third step. As described above, the connection structure (power line with terminal) between the power line 10 and the terminal 30 is manufactured.

The present embodiment provides the following advantages.

The crushed portion 18 of the power line 10 includes the boundary 13 between the conductor exposed portion 11b and the insulating cover portion 16, and the crushed portion 18 is subjected to the crushing process. Since the conductor 11a, 11b is work-hardened in the crushed portion 18, the conductor 11a, 11b is less likely to be bent. The boundary 13 is disposed between the conductor crimping part 32 and the cover crimping part 33. That is, both sides of the work-hardened boundary 13 are crimped by the conductor crimping part 32 and the cover crimping part 33. Therefore, even if stress is concentrated on the step between the conductor 11a and the conductor exposed portion 11b when the power line 10 vibrates, the power line 10 can be restricted from bending at the boundary 13 between the insulating cover portion 16 and the conductor exposed portion 11b. Further, since the conductor crimping part 32 and the cover crimping part 33 do not crimp the boundary 13, even if a step is formed at the boundary 13, the conductor crimping part 32 and the cover crimping part 33 can be suppressed from being inclined at the step.

In the thickness direction of the plate base 31, the end 35a of the coupling portion 35 is disposed closer to the plate base 31 than the center C1 of the conductor 11a (11b). Therefore, the rigidity of the coupling portion 35 can be reduced, and the conductor crimping part 32 is easily deformed to follow the conductor exposed portion 11b. Therefore, it is possible to suppress a decrease in the force with which the conductor crimping part 32 crimps the conductor exposed portion 11b. Even if the rigidity of the coupling portion 35 is reduced, the crushed portion 18 including the boundary 13 is work-hardened. Therefore, even if stress is concentrated on the step of the boundary 13 when the power line 10 vibrates, bending at the boundary 13 can be suppressed.

The conductor crimping part 32 and the plate base 31 crimp the conductor exposed portion 11b included in the crushed portion 18. According to such a configuration, a portion of the conductor exposed portion 11b to be crimped by the conductor crimping part 32 may be crushed. Therefore, when the crushed portion 18 is formed in the power line 10, the portion corresponding to the boundary 13 and the portion corresponding to the conductor exposed portion 11b can be collectively crushed. Therefore, it is easy to form the crushed portion 18 in the power line 10.

The cover crimping part 33 and the plate base 31 crimp the insulating cover portion 16 included in the crushed portion 18. According to such a configuration, as compared with a case where a part of the insulating cover portion 16 that is not included in the crushed portion 18 is crimped, it is possible to suppress the thickness of the insulating cover portion 16 crimped by the cover crimping part 33 from becoming thicker than the thickness of the conductor exposed portion 11b crimped by the conductor crimping part 32. Therefore, the force with which the conductor crimping part 32 crimps the conductor exposed portion 11b can be suppressed from becoming lower than the force with which the cover crimping part 33 crimps the insulating cover 14a (insulating cover portion 16).

The conductor crimping part 32 crimps by thermal crimping. According to such a configuration, the force of fixing the power line 10 by the conductor crimping part 32 can be improved. By work-hardening the crushed portion 18, bending of the power line 10 at the boundary 13 is suppressed. Therefore, when the thermal crimping is conducted by the conductor crimping part 32, a force for fixing the power line 10 and the terminal 30 can be secured.

The connection structure between the power line 10 and the terminal 30 can be manufactured by the first to third steps. The first step includes forming the conductor exposed portion 11b and the crushed portion 18 by peeling off the insulating cover 14a at the end portion 10a after crushing the predetermined portion 17 of the power line 10 including the end portion 10a. According to such a process, before the insulating cover 14a is peeled off from the power line 10, the predetermined portion 17 of the power line 10 to which the insulating cover 14 is still attached is crushed, and thus the crushed portion 18 is easily uniformly work-hardened.

The embodiment may be modified in the following manners. Parts identical to the parts of the above embodiment are designated by the same reference signs as the above embodiment to omit redundant description.

The crimping of the cover crimping part 33 may be performed by thermal crimping. Further, the crimping of the conductor crimping part 32 may be performed by normal (room temperature) crimping instead of thermal crimping.

The crushing process can be performed by sandwiching the power line 10 with a press machine from the side surfaces (first surface) having a smaller width than the top and bottom surfaces (second surface) and applying pressure. In addition, when the predetermined portion 17 of the power line 10 is crushed by hitting it with a hammer or the like, or when the predetermined portion 17 of the power line 10 is passed between a pair of rollers, the crushing can be performed in the same manner.

After the insulating cover 14 is peeled off from the end portion 10a of the power line 10, as shown in FIG. 15, the predetermined portion 17 of the power line 10 including the end portion 10a may be crushed to form the crushed portion 18, as shown in FIG. 16. That is, the first step may be changed to a step of forming the crushed portion 18 by crushing the predetermined portion 17 including the boundary 13 after peeling off the insulating cover 14 at the end portion 10a of the power line 10 to form the conductor exposed portion 11b and the boundary 13. According to such a process, after the insulating cover 14 is peeled off from the end portion 10a of the power line 10 to form the conductor exposed portion 11b and the boundary 13, that is, after a step is generated by removing a part of the conductor 11, the predetermined portion 17 including the boundary 13 is crushed. Therefore, a step formed in the conductor 11 when the insulating cover 14 is peeled off can be leveled by the crushing. Therefore, when the power line 10 vibrates, it is possible to restrict stress from being concentrated on the step between the conductor 11a and the conductor exposed portion 11b.

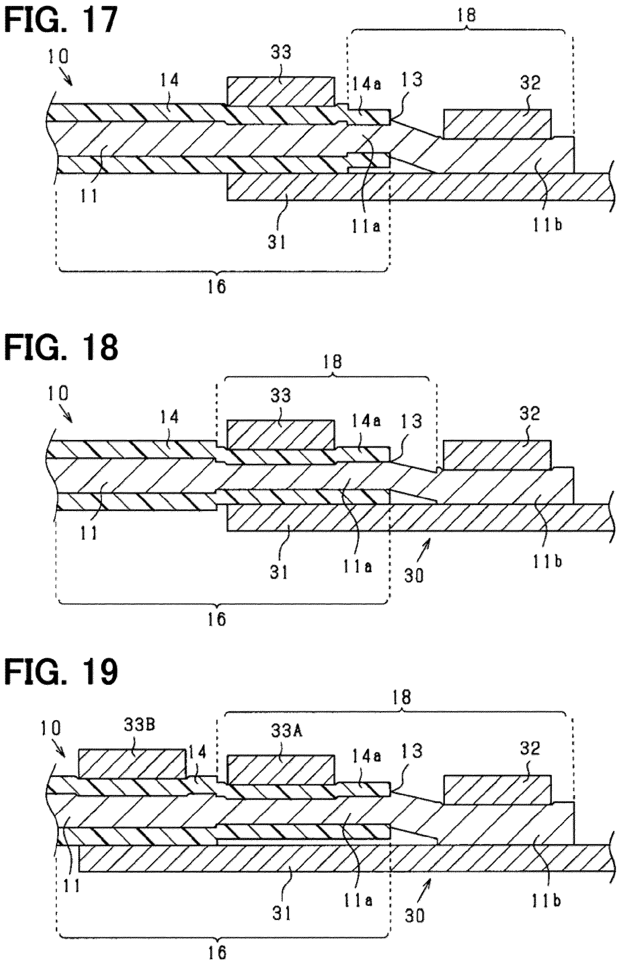

As shown in FIG. 17, the cover crimping part 33 may crimp the insulating cover portion 16 not included in the crushed portion 18, together with the plate base 31. According to such a configuration, the insulating cover portion 16 (insulating cover 14) at a position farther from the boundary 13 than the insulating cover portion 16 (insulating cover 14a) included in the crushed portion 18 can be crimped by the cover crimping part 33. Therefore, the vibration transmitted from the insulating cover portion 16 to the conductor exposed portion 11b can be suppressed from being transmitted to the boundary 13, and the stress acting on the boundary 13 can be reduced.

As illustrated in FIG. 18, the conductor crimping part 32 may crimp the conductor exposed portion 11b not included in the crushed portion 18, together with the plate base 31. Even in this case, since both sides of the work-hardened boundary 13 are crimped by the conductor crimping part 32 and the cover crimping part 33, even if stress is concentrated on the step of the boundary 13 when the power line 10 vibrates, bending at the boundary 13 can be suppressed. Since the step formed at the boundary between the crushed portion 18 and the conductor exposed portion 11b is not a step formed by cutting with a cutter or the like, stress concentration is less likely to occur. In addition, the crushing process can be performed so that both end portions (end portions) of the crushed portion 18 are tapered, that is, the diameters of both end portions (end portions) of the crushed portion 18 smoothly change. According to such a configuration, both end portions (end portions) of the crushed portion 18 are formed in a tapered shape, and it is possible to suppress the formation of a step, and thus it is possible to suppress stress concentration.

As shown in FIG. 19, the terminal 30 may include a cover crimping part 33A, 33B. The cover crimping part 33A crimps the insulating cover portion 16 included in the crushed portion 18, together with the plate base 31. The cover crimping part 33B crimps the insulating cover portion 16 that is not included in the crushed portion 18, together with the plate base 31. The connection structure between the power line 10 and the terminal 30 may include plural conductor crimping parts 32. That is, the terminal 30 may include a plurality of at least one of the conductor crimping part 32 and the cover crimping part 33.

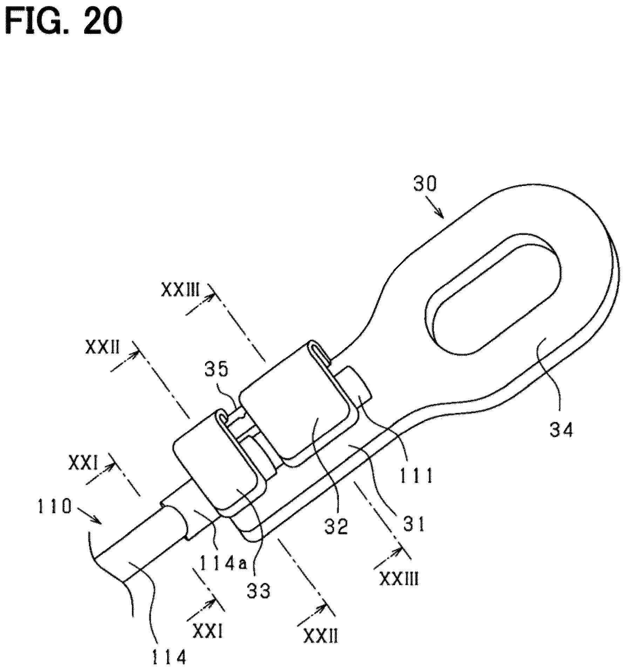

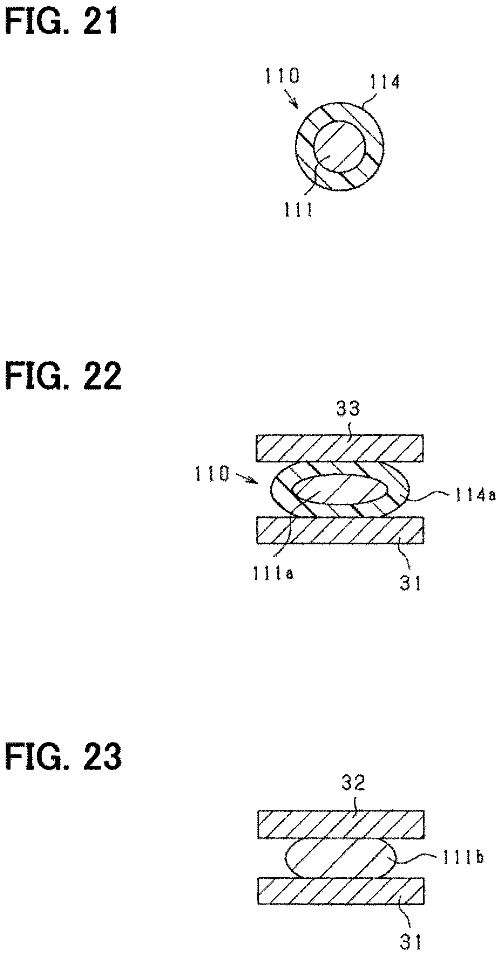

As shown in FIG. 20, a power line 110 formed of a round wire can also be adopted. FIG. 21 is a cross-sectional view taken along line XXI-XXI of FIG. 20. FIG. 22 is a cross-sectional view taken along line XXII-XXII of FIG. 20. FIG. 23 is a cross-sectional view taken along line XXIII-XXIII of FIG. 20. FIG. 21 shows a cross section of the power line 110 that is not crushed. FIG. 22 shows a cross section of a crushed portion of the power line 10. As shown in FIG. 22, pressure is applied to the power line 110 in the radial direction, and the power line 110 is crushed in the up-down direction. Accordingly, the height of the insulating cover 114a is lower than the height of the insulating cover 114, and the width of the insulating cover 114a is wider than the width of the insulating cover 114. The height of the conductor 111a is lower than the height of the conductor 111, and the width of the conductor 111a is wider than the width of the conductor 111. FIG. 23 shows a cross section of the conductor exposed portion 111b subjected to the crushing process. The height of the conductor exposed portion 111b is lower than the height of the conductor 111, and the width of the conductor exposed portion 111b is wider than the width of the conductor 111.

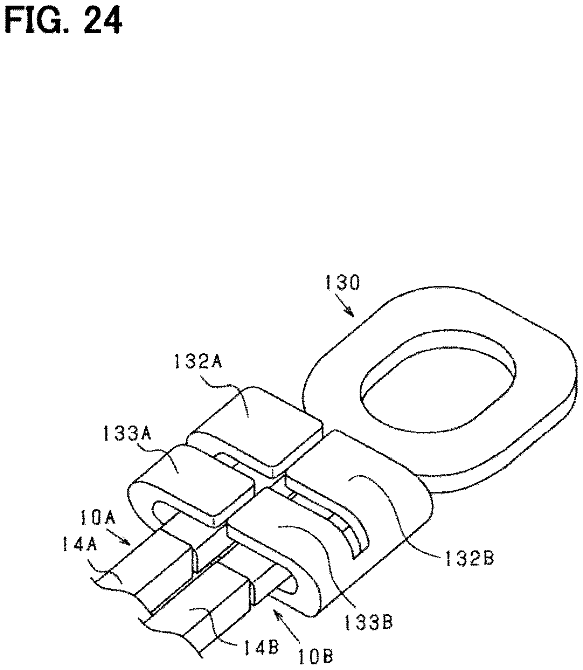

As shown in FIG. 24, the power line 10A is connected to the terminal 130, and the terminal 130 may include a conductor crimping part 132A and a cover crimping part 133A for the power line 10A. The power line 10B is connected to the terminal 130, and the terminal 130 may include the conductor crimping part 132B and the cover crimping part 133B for the power line 10B. The power line 10A, 10B has the same configuration as the power line 10. The conductor crimping part 132A, 132B has the same configuration as the conductor crimping part 32. The cover crimping part 133A, 133B has the same configuration as the cover crimping part 33. According to such a configuration, in the connection structure in which the power lines 10A, 10B are connected to the terminal 130, the power line 10A, 10B can exhibit the same operation and effect as those of the above-described embodiment. Further, instead of the power line 10A, 10B formed of rectangular wires, two power lines 110 formed of round wires may be used.

The embodiment and the modifications thereof may be combined within a combinable range.

## Claims

1. A connection structure comprising:
an insulated wire (10, 10A, 10B, 110) having a conductor (11, 111) covered with an insulating cover (14, 14A, 14B, 114); and
a terminal (30, 130) connected to the insulated wire, wherein
the insulated wire includes:
a cover portion (16) where the conductor is covered with the insulating cover;
an exposed portion (11b, 111b) where the conductor is exposed; and
a crushed portion (18) including a boundary (13) between the exposed portion and the cover portion and subjected to crushing,
the terminal includes:
a plate base (31);
a conductor crimping part (32, 132A, 132B) bent and extended from the plate base to crimp the exposed portion together with the plate base; and
a cover crimping part (33, 33A, 33B, 133A, 133B) bent and extended from the plate base to crimp the cover portion together with the plate base, and
the boundary is positioned between the conductor crimping part and the cover crimping part.

2. The connection structure according to claim 1, wherein
the terminal includes a coupling portion (35) extending in a thickness direction from the plate base at location between the conductor crimping part and the cover crimping part so as to connect the conductor crimping part and the cover crimping part, and
an end (35a) of the coupling portion is located closer to the plate base than a center of the conductor in the thickness direction.

3. The connection structure according to claim 1 or 2, wherein the conductor crimping part crimps the exposed portion included in the crushed portion together with the plate base.

4. The connection structure according to any one of claims 1 to 3, wherein the cover crimping part crimps the cover portion included in the crushed portion together with the plate base.

5. The connection structure according to any one of claims 1 to 3, wherein the cover crimping part crimps the cover portion not included in the crushed portion together with the plate base.

6. The connection structure according to any one of claims 1 to 5, wherein at least one of the conductor crimping part and the cover crimping part conducts crimping by thermal crimping.

7. The connection structure according to any one of claims 1 to 6, wherein the conductor crimping part is one of a plurality of conductor crimping parts and/or the cover crimping part is one of a plurality of cover crimping parts.

8. The connection structure according to any one of claims 1 to 7, wherein
the insulated wire is one of two insulated wires (10A, 10B) connected to the terminal, and
the terminal (130) includes the conductor crimping part (132A, 132B) and the cover crimping part (133A, 133B) for each of the two insulated wires.

9. A method of manufacturing a connection structure in which an insulated wire (10, 10A, 10B, 110) having a conductor (11, 111) covered with an insulating cover (14, 14A, 14B, 114) is connected to a terminal (30, 130), comprising:
a first step of forming, in the insulated wire, a cover portion (16) where the conductor is covered with the insulating cover, an exposed portion (11b, 111b) where the conductor is exposed, and a crushed portion (18) including a boundary (13) between the exposed portion and the cover portion and subjected to crushing;
a second step of bringing the insulated wire into contact with the terminal having a plate base (31), a conductor crimping part (32, 132A, 132B) extended and bent from the plate base, and a cover crimping part (33, 33A, 33B, 133A, 133B) extended and bent from the plate base such that the boundary is located between the conductor crimping part and the cover crimping part; and
a third step of crimping the exposed portion by the plate base and the conductor crimping part and crimping the cover portion by the plate base and the cover crimping part.

10. The method according to claim 9, wherein the first step includes forming the exposed portion and the crushed portion by crushing a predetermined portion (17) of the insulated wire including an end portion (10a) of the insulated wire and then peeling off the insulating cover (14a) at the end portion.

11. The method according to claim 9, wherein the first step includes forming the crushed portion by crushing a predetermined portion (17) of the insulated wire including the boundary after peeling off the insulating cover (14) at an end portion of the insulated wire to form the exposed portion and the boundary.
